Europäisches Patentamt

European Patent Office

Office européen des brevets

(19)

(11) Publication number: **0 239 205 B1**

(12) EUROPEAN PATENT SPECIFICATION

(45) Date of publication of patent specification: **17.04.91**   (51) Int. Cl.⁵: **F16H 3/66**

(21) Application number: **87301021.9**

(22) Date of filing: **05.02.87**

(54) Transmission gearing arrangement.

(30) Priority: **27.02.86 US 833260**

(43) Date of publication of application:
**30.09.87 Bulletin 87/40**

(45) Publication of the grant of the patent:
**17.04.91 Bulletin 91/16**

(84) Designated Contracting States:
**DE FR GB IT**

(56) References cited:
**DE-A- 1 031 647**
**DE-A- 1 450 743**
**DE-A- 1 725 014**
**DE-A- 2 943 451**

(73) Proprietor: **GENERAL MOTORS CORPORA-TION**
**General Motors Building 3044 West Grand Boulevard**
**Detroit Michigan 48202(US)**

(72) Inventor: **Klemen, Donald**
**13137 Cheval Court**
**Carmel Indiana 46032(US)**

(74) Representative: **Denton, Michael John et al**
**Patent Section Vauxhall Motors Limited 1st Floor Gideon House 26 Chapel Street**
**Luton Bedfordshire LU1 2SE(GB)**

## Description

This invention relates to a gearing arrangement for an automotive power transmission as specified in the preamble of claim I, for example as disclosed in US-A-4 070 927.

The invention is thus concerned with a multiple simple planetary gear set arrangement.

In an automotive transmission planetary gearing arrangement as described in the said US-A-4 070 927, three interconnected simple planetary gear sets, two rotary clutches and three non-rotary clutches (generally referred to as brakes) co-operate to provide six forward-speed ranges and one reverse-speed range. When teamed with a hydraulic (hydrodynamic) torque converter, this arrangement offers attractive ratio coverage potential in a particularly simple and compact package.

The present invention is primarily concerned with providing a simple and compact planetary-type gearing arrangement capable of providing broad ratio coverage with small ratio steps.

To this end a gearing arrangement for an automotive power transmission in accordance with the present invention is characterised by the features specified in the characterising portion of claim I.

The present invention thereby makes available a planetary gearing arrangement which represents a novel improvement over the arrangement described in the said US-A-4 070 927, in that it can retain the advantages of simplicity and compactness of the latter and yet offer the potential for broad ratio coverage in small steps including a first forward-speed range that is low enough to permit use of the new and improved arrangement without the need for a hydraulic (hydrodynamic) torque converter.

A primary feature of the present invention is thus that it can provide a new and improved automotive transmission gearing arrangement wherein the advantages of compactness and simplicity of the arrangement described in the said US-A-4 070 927 are retained, and additional ratio coverage is achieved in a particularly simple and economical manner.

Another feature of the present invention is that it can provide a new and improved transmission gearing arrangement wherein three forward-speed ranges in addition to the six forward-speed ranges of the said US-A-4 070 927 result from the addition of only a fourth simple planetary gear set and a fourth brake to the arrangement of the said US-A-4 070 927, the resulting nine forward-speed ranges including a lowest first-speed range established by the use of the added fourth planetary gear set.

Still another feature of the present invention resides in the provision in the new and improved gearing arrangement of a fourth simple planetary gear set including a sun gear continuously connected to the input shaft of the transmission, a ring gear rigidly connected to the planet carrier of the forwardmost one of the three planetary gear sets of the arrangement of the said US-A-4 070 927, and a plurality of planet gears rotatably supported on a carrier which is arranged to be selectively braked by the added fourth brake, the output of the fourth planetary gear set being in a negative direction relative to the direction of rotation of the input shaft and being reversed and compounded by the active ones of the planetary gear sets of the arrangement of the said US-A-4 070 927 to provide additional ratio steps in the forward direction.

In the drawing:

Figure I is a schematic representation of a preferred embodiment of the new and improved transmission gearing arrangement in accordance with the present invention; and

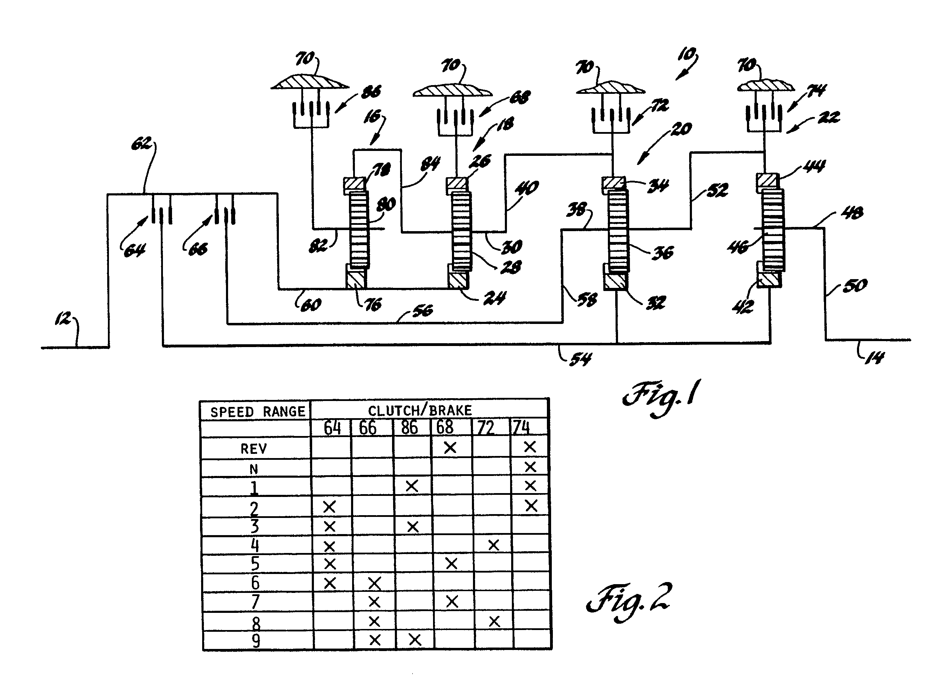

Figure 2 is a table depicting the clutch and brake operating sequence in the gearing arrangement shown in Figure I.

With reference now to Figure I of the drawing, a transmission gearing arrangement I0 in accordance with the present invention includes an input shaft I2, an output shaft I4 aligned with the input shaft, and four planetary gear sets I6, I8, 20 and 22. The gear sets I8, 20 and 22 correspond to the gear sets shown and described in the said US-A-4 070 927.

Specifically, the gear set I8 corresponds to the first gear set of the arrangement of the said US-A-4 070 927, and includes a sun gear 24, a ring gear 26 and a plurality of planet gears 28 meshing with the sun gear and with the ring gear and rotatably supported on a planet carrier 30. The gear set 20 corresponds to the second gear set of the arrangement of the said US-A-4 070 927, and includes a sun gear 32, a ring gear 34 and a plurality of planet gears 36 meshing with the sun gear and with the ring gear and rotatably supported on a planet carrier 38. A drum 40 rigidly connects the planet carrier 30 of the gear set I8 to the ring gear 34 of the gear set 20 for unitary rotation. The gear set 22 corresponds to the third gear set of the arrangement of the said US-A-4 070 927, and includes a sun gear 42, a ring gear 44 and a plurality of planet gears 46 meshing with sun gear 42 and with the ring gear 44 and rotatably supported on a planet carrier 48. The planet carrier 48 is rigidly connected by means of a drum 50 to the output shaft I4, for rotation as a unit therewith. A drum 52 rigidly interconnects the planet carrier 38 of the gear set 20 and the ring gear 44 of the gear set 22 for unitary rotation.

A first intermediate shaft 54 aligned with the input and output shafts is rigidly connected to each of the sun gears 32 and 42 in the gear sets 20 and 22, whereby the sun gears are rotatable as a unit. A tubular second intermediate shaft 56, disposed around the first intermediate shaft 54, is rigidly connected by means of a drum 58 to the carrier 38 of the gear set 20, so that the planet carrier 38 and the ring gear 44 of the gear set 22 rotate as a unit with the second intermediate shaft 56.

A tubular third intermediate shaft 60 disposed around the first and second intermediate shafts 54 and 56 is rigidly connected to the sun gear 24 of the gear set 18. A rotary clutch housing 62 is rigidly connected to the input shaft 12 and to the third intermediate shaft 60, so that the third intermediate shaft and the sun gear 24 rotate continuously as a unit with the input shaft 12.

A first rotary clutch 64 is disposed between the first intermediate shaft 54 and the rotary housing 62, and is selectively operable to connect the first intermediate shaft to the input shaft 12 for rotation as a unit therewith. A second rotary clutch 66 is disposed between the second intermediate shaft 56 and the rotary housing 62, and is selectively operable to connect the second intermediate shaft to the input shaft 12 for rotation as a unit therewith. When the rotary clutches 64 and 66 are disengaged, the input shaft 12 is rotatable relative to each of the first and second intermediate shafts 54 and 56.

A brake 68 is disposed between the ring gear 26 of the gear set 18 and a stationary housing 70 in which the gearing arrangement 10 is disposed, and is selectively operable to rigidly connect the ring gear 26 to the housing 70, whereby rotation of the ring gear is prevented. A brake 72 is disposed between the ring gear 34 of the gear set 20 and the stationary housing 70, and is selectively operable to rigidly connect the ring gear to the stationary housing, whereby rotation of both the ring gear and the planet carrier 30 of the gear set 18 is prevented. A brake 74 is disposed between the ring gear 44 of the gear set 22 and the stationary housing 70 and is selectively operable to rigidly connect the ring gear to the housing, whereby rotation of the ring gear and of the planet carrier 38 of the gear set 20 and the second intermediate shaft 56 is prevented.

The elements thus far described, with the exception of the gear set 16, are identical to the coresponding elements of the arrangement disclosed in the said US-A-4 070 927.

The gear set 16 includes a sun gear 76, a ring gear 78 and a plurality of planet gears 80 meshing with the sun gear and with the ring gear and rotatably supported on a planet carrier 82. The sun gear 76 is rigidly connected to the third intermediate shaft 60, for rotation as a unit therewith and as a unit with the sun gear 24 of the gear set 18. A drum 84 rigidly connects the ring gear 78 to the planet carrier 30 of the gear set 18, whereby the ring gear 78 rotates as a unit with the carrier 30 and with the ring gear 34 of the gear set 20. A brake 86 is disposed between the stationary housing 70 and the planet carrier 82, and is selectively operable to rigidly connect the carrier to the housing.

With reference now to Figures 1 and 2 of the drawing, and describing the operation of the gearing arrangement 10, an important feature of the gearing arrangement is that the advantage of the arrangement of the said US-A-4 070 927, namely single-transition shifting, is retained throughout the nine forward-speed ranges and the one reverse-speed range.

In the neutral condition of the gearing arrangement, the input shaft 12 rotates with the engine and in a conventional fashion continuously drives a pump for supplying hydraulic pressure to the control system for the gearing arrangement 10. In neutral, the control system applies the brake 74 of the gear set 22, so as to ground (brake) the ring gear 44, the planet carrier 38 of the gear set 20, and the second intermediate shaft 56. All of the other clutches and brakes are disengaged and released.

An associated control (not specifically shown) has a conventional automatic-shifting mode for the gearing arrangement whereby the clutches and brakes are sequentially engaged and disengaged and applied and released in response to vehicle speed and power demand. In detail, from the neutral condition (in which the brake 74 is applied), a first forward-speed range is achieved in a single-transition shift by application of the brake 86. The control applies the brake 86 gradually to initiate torque transfer through the gear set 16. As the brake 86 arrests rotation of the planet carrier 82, the planet gears 80 begin to rotate the ring gear 78 at a reduced speed, determined by the ratio of the gears in the gear set, in the opposite (negative) direction relative to the direction of rotation of the input shaft 12.

The negatively directed torque output of the gear set 16 is directed into the gear set 20, because the ring gear 34 is rigidly connected to the ring gear 78. In the gear set 20, the planet carrier 38 is held stationary by the brake 74, so that the planet gears 36 rotate the sun gears 32 and 42 in the positive or same direction of rotation as the input shaft 12. Accordingly, in the gear set 22, with the brake 74 applied, the planet carrier 48 and the output shaft 14 rotate in the positive direction.

Because of the compounding of the gear reductions effected in the gear sets 16 and 22, the overall gear ratio between the input shaft 12 and the output shaft 14 can, without the assistance of a hydraulic (hydrodynamic) torque converter, be made sufficiently low to overcome the inertia of the stationary vehicle and commence movement thereof in the forward direction corresponding to rotation of the output shaft in the positive direction.

At a predetermined speed of the output shaft l4, a second forward-speed range is achieved in another single-transition shift by simultaneous release of the brake 86 and engagement of the rotary clutch 64. The second forward-speed range thus achieved by means of the first intermediate shaft 54 and the gear set 22 corresponds to the first-speed drive range of the arrangement of the said US-A-4 070 927.

At a still higher predetermined speed of the output shaft l4, a third forward-speed range is achieved in another single-transition shift by simultaneous release of the brake 74 and application of the brake 86. When the brake 86 achieves full application, the planet carrier 82 is stationary, so that the sun gear 76, rotating with the input shaft l2, drives the ring gear 78 in the negative direction at reduced speed. In the gear set 20, the ring gear 34 is driven in the negative direction by the ring gear 78 by means of the drums 84 and 40 and the planet carrier 30. Simultaneously, the sun gear 32 in the gear set 20 is driven at input shaft speed in the positive direction by the first intermediate shaft 54. The net result is that the planet carrier 38 rotates in the positive direction and, by means of the drum 52, drives the ring gear 44 in the gear set 22 in the positive direction. Accordingly, in the gear set 22, with the sun gear 42 rotating in the positive direction at input shaft speed and the ring gear 44 rotating in the positive direction at a slower speed, the planet carrier 48 and the output shaft l4 are driven in the positive direction.

At successively higher speeds of the output shaft l4, fourth, fifth, sixth, seventh and eighth forward-speed ranges are achieved by means of additional single-transition shifts. As is seen in Figure 2, with the rotary clutch 64 remaining engaged, third to sixth forward-speed ranges are achieved by, respectively: simultaneous release of brake 86 and application of brake 72 for the three-to-four shift; simultaneous release of brake 72 and application of brake 68 for the four-to-five shift; and simultaneous release of brake 68 and engagement of rotary clutch 66 for the five-to-six shift. Further, with the rotary clutch 66 remaining engaged, the seventh and eighth forward-speed ranges are achieved by, respectively: simultaneous release of rotary clutch 64 and application of brake 68 for the sixth-to-seventh shift; and simultaneous release of brake 68 and application of brake 72 for the seventh-to-eighth shift.

The torque paths defined through the gear arrangement l0 in the fourth to eighth forward-speed ranges correspond to the torque paths through the arrangement of the said US-A-4 070 927 in the second to sixth forward-speed ranges.

The ninth forward-speed range is achieved by means of a single-transition shift when, with the rotary clutch 66 remaining engaged, the brake 72 is released and the brake 86 is simultaneously applied. In the ninth forward-speed range, the negative output of the gear set l6 is applied to the ring gear 34 of the gear set 20 while the planet carrier 38 is rotated in the positive direction by means of the rotary clutch 66. Accordingly, the sun gear 32 of the gear set 20 is overdriven in the positive direction, as is the sun gear 42 in the gear set 22. In the latter gear set, the ring gear 44 defines a reaction member for the sun gear 42, so that the planet carrier 48 and the output shaft l4 are driven in the forward direction.

The reverse-speed range, on the opposite side of neutral from the first forward-speed range, is achieved in a single-transition shift by application of the brake 68 while the brake 74 remains applied.

Thus in the preferred embodiment of a gearing arrangement in accordance with the present invention which has been described, a fourth planetary gear set l6 and a fourth brake 86 are added to a basic gearing arrangement corresponding to that disclosed in the prior US-A-4 070 927. When the fourth brake is applied, the output of the fourth planetary gear set is a low first ratio which however is effective in a reverse direction of rotation. The output of this fourth gear set is used as the input to the gear arrangement corresponding to that disclosed in the prior US-A-4 070 927, which gear arrangement effectively reverses the direction of the input thereto so that overall a low first forward-speed range can be obtained.

## Claims

1.  A gearing arrangement for an automotive power transmission, comprising:

    an input shaft (l2) and an output shaft (l4);
    first (l8), second (20) and third (22) simple planetary gear sets each having a sun gear (24,32,42), a ring gear (26,34,44) and a plurality of planet gears (28,36,46) meshing with the sun (24,32,42) and the ring (26,34,44) gears and rotatably supported on a planet carrier (30,38,48);
    means (52) rigidly interconnecting the ring gear (44) of the third gear set (22) and the planet carrier (38) of the second gear set (20);
    means (40) rigidly interconnecting the ring gear (34) of the second gear set (20) and the planet carrier (30) of the first gear set (l8);

means (50) rigidly interconnecting the output shaft (14) and the planet carrier (48) of the third gear set (22);

a first intermediate shaft (54) rigidly interconnecting the sun gears (32,42) of the second (20) and third (22) gear sets for unitary rotation;

a second intermediate shaft (56) rigidly connected to the planet carrier (38) of the second gear set (20);

a third intermediate shaft (60) continuously connected to the input shaft (12) and to the sun gear (24) of the first gear set (18);

first (68), second (72) and third (74) brake means operative to selectively brake rotation of the ring gears (26,34,44) of the first (18), second (22) and third (22) gear sets respectively;

a first rotary clutch (64) selectively operable to interconnect the input shaft (12) and the first intermediate shaft (54) for unitary rotation; and

a second rotary clutch (66) selectively operable to interconnect the input shaft (12) and the second intermediate shaft (56) for unitary rotation;

characterised in that:

a fourth simple planetary gear set (16) includes a sun gear (76), a ring gear (78) and a plurality of planet gears (80) meshing with the sun (76) and ring (78) gears and rotatably supported on a planet carrier (82);

the sun gear (76) of the fourth gear set (16) is rigidly connected to the third intermediate shaft (60);

the ring gear (78) of the fourth gear set (16) is rigidly connected to the planet carrier (30) of the first gear set (18); and

a fourth brake means (86) is selectively operable to brake the planet carrier (82) of the fourth gear set (16).

## Revendications

1. Ensemble d'engrenages pour une boîte de vitesses d'automobile, comprenant :

un arbre d'entrée (12) et un arbre de sortie (14) ;

des premier (18), deuxième (20) et troisième (22) trains d'engrenages planétaires simples, dont chacun possède une roue planétaire (24, 32, 42), une couronne (26, 34 44), et un jeu de pignons satellites (28, 36, 46) qui engrènent avec la roue planétaire (24, 32, 42) et avec la couronne (26, 34, 44) et sont montés rotatifs sur un porte-satellites (30, 38, 48) ;

des moyens (52) qui accouplent rigidement la couronne (44) du troisième train d'engrenages (22) et le porte-satellites (38) du deuxième train d'engrenages (20) ;

des moyens (40) qui accouplent rigidement la couronne (34) du deuxième train d'engrenages (20) au porte-satellites (30) du premier train d'engrenages (18) ;

des moyens (50) qui accouplent rigidement l'arbre de sortie (14) et le porte-satellites (48) du troisième train (22) d'engrenages ;

un premier arbre intermédiaire (54) qui accouple rigidement les roues planétaires (32, 42) des deuxième (20) et troisième (22) trains d'engrenages pour qu'elles tournent comme un seul bloc ;

un deuxième arbre intermédiaire (56) accouplé rigidement au porte-satellites (38) du deuxième train d'engrenages (20) ;

un troisième arbre intermédiaire (60) qui est accouplé en permanence à l'arbre d'entrée (12) et à la roue planétaire (24) du premier train d'engrenages (18) ;

des premier (68), deuxième (72) et troisième (74) freins qui entrent en action pour freiner sélectivement la rotation des couronnes (26, 34, 44) des premier (18), deuxième (20) et troisième (22) trains d'engrenages respectivement ;

un premier embrayage rotatif (64) qui peut être mis sélectivement en action pour accoupler l'arbre d'entrée (12) au premier arbre intermédiaire (54) pour qu'ils tournent comme un seul bloc ; et

un deuxième embrayage rotatif (66) qui peut être sélectivement mis en action pour accoupler l'arbre d'entrée (12) au deuxième arbre intermédiaire (56) pour qu'ils tournent comme un seul bloc ;

caractérisé en ce qu'un quatrième train d'engrenages planétaire simple (16) comprend une roue planétaire (76), une couronne (78) et un jeu de pignons satellites (80) qui engrènent avec la roue planétaire (76) et avec la couronne (78) et qui sont montés rotatifs sur un porte-satellites (82) ;

la roue planétaire (76) du quatrième train d'engrenages (16) est accouplée rigidement au troisième arbre intermédiaire (60) ;

la couronne (78) du quatrième train d'engrenages (16) est accouplée rigidement au porte-satellites (30) du premier train d'engrenages (18); et

un quatrième frein (86) peut être sélectivement mis en action pour freiner le porte-satellites (82) du quatrième train d'engrenages (16).

**Ansprüche**

1. Übersetzungsanordnung für ein Kraftfahrzeug-Leistungsgetriebe, welche umfaßt:

eine Eingangswelle (12) und eine Ausgangswelle (14);

erste (18), zweite (20) und dritte (22) einfache Planetengetriebesätze mit jeweils einem Sonnenzahnrad (24, 32, 42), einem Ringzahnrad (26, 34, 44) und einer Vielzahl von Planetenzahnrädern (28, 36, 46), die mit den Sonnen- (24, 32, 42) und den Ring- (26, 34, 44) Zahnrädern kämmen und drehbar an einem Planetenträger (30, 38, 48) abgestützt sind;

starr das Ringzahnrad (44) des dritten Getriebesatzes (22) mit dem Planetenträger (38) des zweiten Getriebesatzes (20) miteinander verbindendes Mittel (52);

starr das Ringzahnrad (34) des zweiten Getriebesatzes (20) mit dem Planetenträger (30) des ersten Getriebesatzes (18) verbindendes Mittel (40);

starr die Ausgangswelle (14) mit dem Planetenträger (48) des dritten Getriebesatzes (22) verbindendes Mittel (50);

eine die Sonnenzahnräder (32, 42) des zweiten (20) und des dritten (22) Getriebesatzes zur einheitlichen Drehung miteinander verbindende erste Zwischenwelle (54);

eine starr mit dem Planetenträger (38) des zweiten Getriebesatzes (20) verbundene zweite Zwischenwelle (56);

eine kontinuierlich mit der Eingangswelle (12) und dem Sonnenzahnrad (24) des ersten Getriebesatzes (18) verbundene dritte Zwischenwelle (60);

erste (68), zweite (72) und dritte (74) Bremsmittel, die wirksam sind, wahlweise Drehung der Ringzahnräder (26, 34, 44) des ersten (18), zweiten (22) bzw. dritten (22) Getriebesatzes abzubremsen;

eine erste Drehkupplung (74), die wahlweise betätigbar ist, die Eingangswelle (12) mit der ersten Zwischenwelle (54) zu einheitlicher Drehung zu verbinden, und

eine zweite Drehkupplung (66), die wahlweise betätigbar ist, die Eingangswelle (12) mit der zweiten Zwischenwelle (56) zur einheitlichen Drehung zu verbinden;

dadurch gekennzeichnet, daß:

ein vierter einfacher Planetengetriebesatz (16) ein Sonnenzahnrad (76), ein Ringzahnrad (78) und eine Vielzahl von mit dem Sonnen- (76) und dem Ring- (78) Zahnrädern kämmenden und drehbar an einem Planetenträger (82) abgestützten Planetenzahnrädern (80) enthält;

das Sonnenzahnrad (76) des vierten Getriebesatzes (16) starr mit der dritten Zwischenwelle (60) verbunden ist;

das Ringzahnrad (78) des vierten Getriebesatzes (16) starr mit dem Planetenträger (30) des ersten Getriebesatzes (18) verbunden ist; und

ein viertes Bremsmittel (86) wahlweise betätigbar ist, den Planetenträger (82) des vierten Getriebesatzes (16) abzubremsen.

EP 0 239 205 B1

Fig.1

| SPEED RANGE | CLUTCH/BRAKE | | | | | |
|---|---|---|---|---|---|---|
| | 64 | 66 | 86 | 68 | 72 | 74 |
| REV | | | | X | | X |
| N | | | | | | X |
| 1 | | | X | | | X |
| 2 | X | | | | | X |
| 3 | X | | X | | | |
| 4 | X | | | | X | |
| 5 | X | | | X | | |
| 6 | X | X | | | | |
| 7 | | X | | X | | |
| 8 | | X | | | X | |
| 9 | | X | X | | | |

Fig.2